# EUROPÄISCHE PATENTSCHRIFT

(11) **EP 3 325 862 B1**
(45) Veröffentlichungstag und Bekanntmachung des Hinweises auf die Patenterteilung: **04.08.2021**
(21) Anmeldenummer: 16728261.5
(22) Anmeldetag: 30.05.2016
(51) Int. Cl.: F16K 31/06

(54) **STROMLOS GESCHLOSSENES MAGNETVENTIL**
NORMALLY CLOSED SOLENOID VALVE
ÉLECTROVALVE NORMALEMENT FERMÉE

(30) Priorität: 22.07.2015 DE 102015213844
(43) Veröffentlichungstag der Anmeldung: 30.05.2018
(73) Patentinhaber: Robert Bosch GmbH, 70442 Stuttgart (DE)
(72) Erfinder: GODBILLON, Pascal, 74074 Heilbronn (DE); AMBROSI, Massimiliano, 71726 Benningen (DE); EISENLAUER, Michael, 71563 Affalterbach (DE); KURZ, Edgar, 74081 Heilbronn-Horkheim (DE); ALAZE, Norbert, 71706 Markgroeningen (DE)
(86) Internationale Anmeldenummer: PCT/EP2016/062146
(87) Internationale Veröffentlichungsnummer: WO 2017/012758

(56) Entgegenhaltungen:
- DE-A1- 3 542 131
- DE-A1-102012 200 156

## Beschreibung

Die Erfindung betrifft ein stromlos geschlossenes Magnetventil mit einer Ventilhülse, in der ein Polkern fest und ein eine Ventilspitze aufweisender Anker axial verlagerbar angeordnet sind, wobei zwischen dem Polkern und dem Anker eine Schraubenfeder wirkt, um die Ventilspitze in einen Ventilsitz zu drängen.

### Stand der Technik

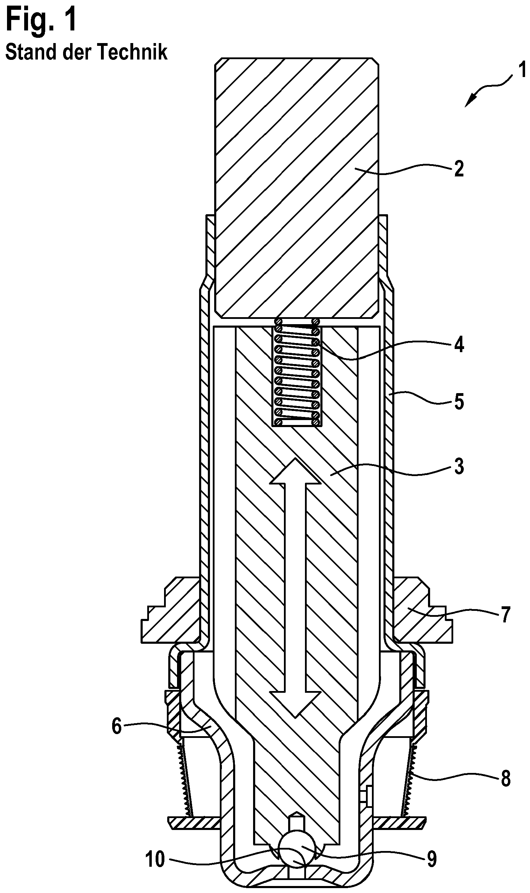

Magnetventile der eingangs genannten Art sind aus dem Stand der Technik bekannt. Ein derartiges Magnetventil ist bspw. das stromlos geschlossene Bosch Magnetventil MV09OS mit der TTNr. 1267691803 aus dem Jahr 2014, welches in Figur 1 dargestellt ist. Das Magnetventil 1 umfasst eine Magnetaktorik, die eine bestrombare Magnetspule (nicht dargestellt) sowie einen Polkern 2 umfasst und auf einen in der Ventilhülse 5, 6 axial verlagerbaren Anker 3 wirkt. Die Ventilhülse 5, 6 kann als zweigeteilte Ventilhülse mit einer oberen Ventilhülse 5 und einer unteren Ventilhülse 6 ausgestaltet sein. Die Ventilhülse 5 ist in der Ventilbuchse 7 positioniert. Ein Filter 8 umgibt den Einlass in der Ventilhülse 6. Der Anker 3 weist weiterhin ein Schließelement 9 auf, die im stromlosen Zustand des Magnetaktors gegen einen Ventilsitz 10 gedrängt wird. Hierzu ist der Anker 3 vorgespannt in der Ventilhülse 5, 6 gehalten. Üblicherweise wird zum Aufbringen der Vorspannung eine Druckfeder 4, insbesondere eine Schraubenfeder, vorgesehen, die zwischen dem Polkern 2 und dem Anker 3 wirkt beziehungsweise vorgespannt gehalten ist. Die Druckfeder 4 stützt sich dabei einendig an dem fest angeordneten Polkern 2 und anderendig an dem verlagerbaren Anker 3 ab. Hierfür weist der Anker 3 eine Aussparung auf, in welcher die Schraubenfeder im Wesentlichen einliegt und geführt wird. In einer alternativen Ausführung kann auch der Polkern 2 eine Aussparung aufweisen, in welcher die Schraubenfeder im Wesentlichen einliegt und geführt wird - diese Ausführung ist jedoch nicht in Figur 1 dargestellt. Der über die Aussparung hinausgehende Teil der Druckfeder 4 stützt sich an dem Polkern 2 ab und erstreckt sich von der dem Polkern 2 zugewandten Stirnseite des Ankers 3 bis zu der dem Anker 3 zugewandten Stirnseite des Polkerns 2, deren Abstand zueinander im stromlosen Zustand den sogenannten Arbeitsluftspalt bildet. Dieser Arbeitsluftspalt bestimmt den maximal möglichen Verlagerungsweg des Ankers 3, und damit den Hubweg des Magnetventils 1. Bei einem Bestromen des Magnetventils 1 wird der Luftspalt zwischen dem Polkern 2 und dem Anker 3 geschlossen indem sich der Anker 3 nach oben bewegt, bis er an den Polkern 2 anschlägt. Bei einem Entstromen wird der Anker durch die Druckfeder 4 gegen die Ventilhülse 5,6 nach unten bewegt bis das Schließelement 9 an den Ventilsitz 10 anliegt und das Ventil damit geschlossen ist. Üblicherweise nimmt bei einem Bestromen die Magnetkraft mit kleiner werdendem Arbeitsluftspalt zu. Dieser ansteigende Magnetkraftverlauf erschwert die stetige Stellbarkeit des Magnetventils 1. Um die Stellbarkeit zu verbessern, ist es bekannt, eine Druckfeder 4 mit progressiven Federkennlinien vorzusehen, oder auch bspw. eine zusätzliche Scheibenfeder (nicht dargestellt) mit einer progressiven Federkennlinie vorzusehen.

Aus dem Stand der Technik ist beispielsweise die Schrift DE102010040631A1 bekannt. Hierin ist ein stromlos geschlossenes Magnetventil, mit einer Ventilhülse beschrieben, in der ein Polkern fest und ein eine Ventilspitze aufweisender Anker axial verlagerbar angeordnet sind, wobei zwischen dem Polkern und dem Anker eine Schraubenfeder wirkt, um die Ventilspitze in einen Ventilsitz zu drängen. Dabei ist vorgesehen, dass zu der Schraubenfeder eine weitere Schraubenfeder parallel geschaltet ist.

Aus dem Stand der Technik ist weiterhin die Schrift DE 3542131 A1 bekannt. Diese beschreibt eine Ventilvorrichtung mit einem Gehäuse, in dem ein Kanal ausgebildet ist, Ventilelementen zum Öffnen und Schließen des Kanals, einer Feder zum Beaufschlagen der Ventilelemente und einem Steuerelement zum Verschieben der Ventilelemente gegen die Federkraft. Die Feder weist wenigstens zwei Möglichkeiten der Verformung auf, wobei eine eine größere Federkonstante als die andere Möglichkeit der Verformung hat und in einer der beiden Ventilstellungen auftritt. Das Steuerelement liefert eine relativ große Kraft zum Verschieben der Ventilelemente in die Ventilstellung, in der die Feder mit der größeren Federkonstanten verformt wird.

Bei neuen, sogenannten 1-Box Bremssystemen soll das Hydraulikaggregat direkt mit der Spritzwand eines Fahrzeuges verschraubt werden. Dies bedeutet für alle Komponenten im Hydraulikaggregat gesteigerte Anforderungen an das Noise-Vibration-Harshness (NVH) Verhalten, da Geräusche, die beispielsweise durch das Schalten von Magnetventilen des Hydraulikaggregats entstehen, durch diese Befestigungsart direkt in den Innenraum übertragen werden. Bei einem stromloss geschlossenen Auslassventil kann es beispielsweise zu einem Öffnungs-Klickgeräusch kommen, wenn der meist aus Stahl gefertigte Anker beim Bestromen auf den ebenfalls aus Stahl gefertigten Polkern schlägt.

### Offenbarung der Erfindung

Für einen Einsatz von Magnetventilen bei einer derartigen Befestigung, wäre es vorteilhaft, derartige Geräusche zu mindern oder möglichst ganz zu vermeiden. Hierdurch könnte ein aus NVH-Gesichtspunkten akzeptables Öffnungsverhalten erlangt werden.

Es ist daher ein stromlos geschlossenes Magnetventil, mit einer Ventilhülse vorgesehen, in der ein Polkern fest und ein Anker axial verlagerbar angeordnet sind, wobei zwischen dem Polkern und dem Anker eine Druckfeder wirkt, um ein mit dem Anker zusammenwirkendes Schließelement in einen Ventilsitz zu drängen, wobei eine Vorspannkraft der Druckfeder eine Verformung einer elastischen, zwischen dem Anker und dem Polkern angeordneten Komponente bewirkt. Erfindungsgemäß ist das Ventil dadurch gekennzeichnet, dass ein Anschlagen des bewegten Ankers an den Polkern mittels einer Rückbildung dieser Verformung gedämpft wird.

Hierunter wird verstanden, dass eine elastische Komponente in das System eingebracht wird. Diese Komponente wird zwischen dem Polkern und dem Anker positioniert. Eine im System vorhandene Druckfeder, bspw. als Schraubenfeder ausgeführt, führt zu einer spezifischen, definierten Verformung der elastischen Komponente in unbestomten Zustand des Magnetventils. Im weiteren Verlauf, das heißt bei einer Bestromung des Magnetventils und einer Auslenkung des Ankers, wird mittels der Rückverformung der spezifischen, definierten Verformung ein Anschlagen des Ankers an den Polkern gedämpft. Durch diese Dämpfung werden die Auswirkungen eines solchen Anschlagens reduziert. Als Auswirkungen ist insbesondere die Übertragung von Körperschall im System zu nennen, die reduziert oder vermieden werden sollen. Unter einem Anschlagen des Ankers an den Polkern ist jegliche Art der Kraft- und/oder Impulsübertragung zwischen beiden Komponenten zu verstehen. Selbstverständlich fällt hierunter auch ein indirektes Anschlagen des Ankers an den Polkern über eine weitere Komponente, wie etwa einer elastischen Komponente, bspw. einer Federscheibe, die zwischen den beiden Komponenten Anker und Polkern positioniert ist. Hierdurch kann ein aus NVH-Gesichtspunkten akzeptabels Öffnungsverhalten erzielt werden, auch bei einer direkten Anbindung des Hydraulikaggregats an die Spritzwand.

In einer vorteilhaften Ausgestaltung ist das Ventil dadurch gekennzeichnet, dass die elastische Komponente als zumindest eine Federscheibe, insbesondere als Federscheibenpaket, ausgebildet ist.

Hierunter ist zu verstehen, dass eine Federscheibe eingesetzt werden kann, um die oben beschriebenen Effekte zu erzielen. Die Anzahl an Federscheiben kann variabel angepasst werden, je nach Dimensionierung und Materialcharakteristik der Scheiben als auch je nach Anwendungsfall und zu erzielender Dämpfung. Hierbei stellt sich der beschriebene Effekt der Deformation und Rückbildung der Deformation bereits bei einer Federscheibe ein. Durch die Verwendung mehrere Scheiben kann es jedoch zu weiteren Effekten, bspw. Reibungseffekte sowie Abbau von Unebenheiten, zwischen den Federscheiben kommen. Beispielsweise kann vorteilhaft ein Paket von Federscheiben eingesetzt werden, um die Effekte zu erhöhen. Die Federscheiben können weiterhin als Stanzteile aus einem Standardblech hergestellt werden. Auch ist eine Handhabung als Schüttgut möglich. Hierdurch ist die Lösung kostengünstig realisierbar.

In einer vorteilhaften Ausgestaltung ist das Ventil dadurch gekennzeichnet, dass die Federscheibe in unverformtem Zustand im Wesentlichen eben ist, sowie die Verformung eine Wölbung der Federscheibe bewirkt.

Hierunter ist zu verstehen, die Federscheibe prinzipiell die Planfläche einer Scheibe aufweisen. Die Grundform der Federscheibe ist damit scheibenförmig und im Wesentlichen eben. Hierdurch kann vorteilhaft auf sehr einfache und kostengünstige Standardkomponenten zurückgegriffen werden. Die benötigte Form für eine Dämpfung des Anschlagens, d.h. die gewünschte Wölbung, wird ausschließlich mittels der Vorspannkraft der Druckfeder im System erzeugt. Daher ist auch kein formgebender Bearbeitungsschritt im Vorfeld notwendig. Die Wölbung wird rein durch die reguläre Montage der Komponenten erzeugt. Es ist daher weder notwendig noch vorteilhaft, dass die Federscheibe eine definierte geformte Federstruktur aufweist, wie bspw. eine Tellerfeder.

In einer bevorzugten Weiterbildung ist das Ventil dadurch gekennzeichnet, dass durch die Vorspannkraft der Druckfeder ein Außenrand der Federscheibe in Gegenrichtung zur wirkenden Vorspannkraft der Druckfeder gewölbt wird, wobei mittels dieser Wölbung ein Anschlagen des Ankers an den Polkern gedämpft wird.

Hierunter wird verstanden, dass die Komponenten dergestalt dimensioniert, charakterisiert und aufeinander abgestimmt sind, dass sich folgende Effekte einstellen: Die Druckfeder besitzt eine Vorspannung und stützt sich über die Federscheiben und einen Aufstützpunkt (bspw. eine Restluftspaltscheibe oder eine Polkernstufung) am Polkern ab. Durch die wirkende Vorspannkraft der Druckfeder werden die Federscheiben am Aufstützpunkt der Druckfeder in Richtung des Polkerns gewölbt. Als Aufstützpunkt soll selbstverständlich auch eine Fläche oder Teilfläche verstanden werden, bspw. auch ein kreisförmiges Segment an welchem die Federscheibe anliegt. Dieses Durchbiegen hebt das Federscheibenpaket in unbestromten Zustand des Ventils am Außendurchmesser von der Restluftspaltscheibe, bzw. Polkernstufung ab. Das heißt der äußere Rand der Federscheibe, bzw. des Federscheibenpakets wird beginnend beim Aufstützpunkt entgegen der Druckrichtung der Druckfeder gewölbt. Beim Bestromen des Ventils wird der bestehende Arbeitsluftspalt zwischen Anker und Polkern durch die Bewegung des Ankers geschlossen. Der Anker prallt jedoch nicht wie im Stand der Technik ungebremst gegen den Polkern, sondern wird durch den Federweg der wegen der Vorwölbung der Federscheiben zur Verfügung steht, verzögert, bis er seine Endlage erreicht hat. Selbstverständlich führt auch eine zumindest bereichsweise und/oder teilweise Rückformung der Wölbung zu einem Dämpfungseffekt. Durch die Kombination der Federscheibe mit einem Aufstützpunkt wird ein federndes System erzeugt, dass zwischen dem Polkern und dem Anker eingebaut den Impuls eines Anschlagens dämpft und so den Körperschall im System mindert.

In einer weiteren vorteilhaften Ausführungsform ist das Ventil dadurch gekennzeichnet, dass zwischen dem Polkern und der Federscheibe eine Auflagemöglichkeit im äußeren radialen Bereich und ein Hohlraum im inneren radialen Bereich, insbesondere zur Ausbildung der Verformung der Federscheibe, ausgebildet sind.

Hierunter ist zu verstehen, dass durch eine bauliche Struktur der Komponenten selbst oder durch weitere Komponenten die Möglichkeit geschaffen wird, die gewünschte Wölbung der Federscheibe in unbestromten Zustand zu ermöglichen, sowie die Rückformung bei einem Anschlagen des Ankers an den Polkern zu ermöglichen. Als Auflagemöglichkeit ist bspw. der zuvor beschriebene Aufstützpunkt zu verstehen. Wie bereits ausgeführt können daher als Auflagemöglichkeit bspw. Restluftspaltscheiben eingesetzt werden. In einer alternativen Ausführung kann der Polkern auch mit einer Polkernstufung versehen sein, die diese Funktionen ermöglicht. In einer derartigen Ausgestaltung kann die Federscheibe in direkten Kontakt mit der dem Anker zugewandten Stirnfläche des Polkerns stehen. Vorteilhaft an der Verwendung einer Restluftspaltscheibe ist, dass zum Erzeugen der federnden und dämpfenden Wirkung plane Flächen an Anker und Polkern ausreichend sind. Teure Konturierungen an Anker und Polkern, welche zum Teil auch eine palettierte und somit teure Anlieferung zum Schutz der Kontur bedingen, sind damit unnötig. Vorteilhaft an der Verwendung einer Konturierung, bspw. einer Polkernstufung ist hingegen, dass auf die Verwendung zusätzlicher Komponenten verzichtet werden kann. Hierdurch spart man Bauteilkosten. Weiterhin ist auch die Montage hierdurch reduziert und vereinfacht.

In einer alternativen Ausführungsform ist das Ventil dadurch gekennzeichnet, dass zwischen dem Anker und der Federscheibe eine Auflagemöglichkeit im äußeren radialen Bereich und ein Hohlraum im inneren radialen Bereich, insbesondere zur Ausbildung der Verformung der Federscheibe, ausgebildet sind. Hierfür kann insbesondere eine Ankerstufung vorgesehen ein.

In einer vorteilhaften Weiterbildung ist das Ventil dadurch gekennzeichnet, dass in unbestromtem Zustand des Ventils ein Arbeitsluftspalt zwischen der Federscheibe und der dem Polkern zugewandten Stirnseite des Ankers vorliegt und in bestromtem Zustand des Ventils die dem Polkern zugewandte Stirnseite des Ankers in direktem Kontakt, insbesondere in direktem Kontakt und im Wesentlichen flächig, an der Federscheibe anliegt.

In einer alternativen Weiterbildung ist das Ventil dadurch gekennzeichnet, dass in unbestromtem Zustand des Ventils ein Arbeitsluftspalt zwischen der Federscheibe und der dem Anker zugewandten Stirnseite des Polkerns vorliegt und in bestromtem Zustand des Ventils die dem Anker zugewandte Stirnseite des Polkerns in direktem Kontakt, insbesondere in direktem Kontakt und im Wesentlichen flächig, an der Federscheibe anliegt.

In einer bevorzugten Ausführungsform ist das Ventil dadurch gekennzeichnet, dass eine zum Anker weisende Stirnfläche des Polkerns im Wesentlichen geschlossen und/oder eben ist, und zwischen dem Polkern und der Federscheibe eine Restluftspaltscheibe positioniert ist, wobei die Restluftspaltscheibe insbesondere eine radial außen gelegene Auflagemöglichkeit für die Federscheibe an den Polkern sowie einen radial innen gelegenen Hohlraum zwischen der Federscheibe und dem Polkern ausbildet. Wie bereits ausgeführt ist ein sogenannter Aufstützpunkt zur Erzielung des gewünschten Effekts notwendig. Durch die wirkende Vorspannkraft der Druckfeder werden die Federscheiben am Aufstützpunkt der Druckfeder - in zur Federkraft entgegen gerichteten Richtung - gewölbt. Als Aufstützpunkt kann eine Oberflächenstrukturierung einer bestehenden Komponenten (bspw. einer Stufung des Polkerns) oder externe Komponenten (bspw. einen Restluftscheibe) Verwendung finden. Als Restluftspaltscheibe kommt bspw. eine ringförmige Standardscheibe aus nicht-magnetisierbaren zum Einsatz. Alternativ ist auch der Einsatz eines magnetisierbaren Materials möglich, um die Magnetkraft zu erhöhen. Als eine derartige Restluftspaltscheibe kann ein existierendes Serienteil verwendet werden. Eine Handhabung als Schüttgut ist möglich. Hierdurch wird eine kostengünstige Lösung ermöglicht. In einer vorteilhaften Ausführungsform befindet sich über, bzw. mittels der Restluftspaltscheibe zumindest eine Federscheibe in Kontakt mit Polkern, bzw. alternativ in Kontakt mit dem Anker.

In einer vorteilhaften Ausführung ist das Ventil dadurch gekennzeichnet, dass eine zum Anker weisende Stirnfläche des Polkerns eine axial ausgebildete Kontur über den Durchmesser aufweist, wobei diese Kontur insbesondere eine radial außen gelegene Auflagemöglichkeit für die Federscheibe an den Polkern sowie einen radial innen gelegenen Hohlraum zwischen der Federscheibe und dem Polkern ausbildet.

Hierunter ist zu verstehen, dass als Aufstützpunkt wie bereits ausgeführt nicht nur eine externe Komponenten (bspw. einen Restluftscheibe) sondern auch eine Oberflächenstrukturierung einer bestehenden Komponenten (bspw. einer Stufung des Polkerns) Verwendung finden kann. Hierfür ist eine Stufung des Polkerns geeignet. Diese kann radial einstufig oder auch mehrstufig ausgeprägt sein. Neben Stufen sind auch fließende Übergänge oder Mischformen denkbar. Ein derartiger Absatz kann bspw. durch spanende Fertigungsverfahren, wie Drehen und Fräsen, eingebracht werden. Die Polkernstufung ist insbesondere umlaufend über den Umfang des Polkerns ausgeführt. Die Stufung kann dabei eine oder mehrere über den Umfang verteilt Einkerbungen, bspw. für einen Fluidvolumenverschiebung aufweisen.

In einer vorteilhaften Ausgestaltung ist das Ventil dadurch gekennzeichnet, dass die Druckfeder, insbesondere eine Schraubenfeder, zumindest bereichsweise zwischen der Federscheibe und dem Anker angeordnet ist. Wie bereits beschrieben weist der Anker hierzu eine Vertiefung zur Aufnahme und Führung der Druckfeder auf.

In einer alternativen Ausgestaltung ist das Ventil dadurch gekennzeichnet, dass die Druckfeder, insbesondere eine Schraubenfeder, zumindest bereichsweise zwischen der Federscheibe und dem Polkern angeordnet ist.

In einer weiteren vorteilhaften Ausgestaltung ist das Ventil dadurch gekennzeichnet, dass die Federscheibe mittels der Druckfeder an der Stirnfläche des Polkern axial gehalten wird.

Hierunter ist zu verstehen, dass die Federscheiben auch im unbestromten Zustand in einer definierten Position gehalten werden. Hierfür weist die Druckfeder eine Vorspannung auf. Diese Vorspannung kann bei der Montage des Ventils aufgebracht werden. Die Druckfeder stützt sich weiterhin dadurch über die Federscheiben an dem Polkern ab. Neben einem direkten Abstützen ist hierbei auch ein indirektes Abstützen mittels einer weiteren Komponente, bspw. einer Restluftspaltscheibe möglich.

In einer alternativen Ausgestaltung ist das Ventil dadurch gekennzeichnet, dass die Federscheibe mittels der Druckfeder an der Stirnfläche des Ankers axial gehalten wird.

In einer vorteilhaften Weiterbildung ist das Ventil dadurch gekennzeichnet, dass ein Innendurchmesser der Auflagemöglichkeit größer ist als ein Außendurchmesser der Druckfeder. Durch eine derartige bauliche Bedingung kann vorteilhaft eine erwünschte Wölbung der Federscheiben erzielt werden. Hierbei erfolgt am Einwirkungspunkt der Druckfeder auf die Federscheibe eine Verformung in Richtung der wirkenden Vorspannkraft der Druckfeder. An der Auflagemöglichkeit, d. h. am Aufstützpunkt, wird die Federscheibe an einer Verformung verhindert. Hierdurch wird im äußeren Bereich der Federscheibe, d. h. radial weiter außen als die Auflagemöglichkeit eine gegenläufige Verformung der Federscheibe, d. h. entgegen der wirkenden Vorspannkraft der Druckfeder, ermöglicht.

### Ausführungsformen

Von den Figuren zeigt:
Fig. 1 eine schematische Schnittansicht eines Magnetventils aus dem Stand der Technik, und
Fig. 2 einen Ausschnitt einer Schnittansicht eines Ausführungsbeispiels des Magnetventils mit einer Restluftspaltscheibe, und
Fig. 3 einen Ausschnitt einer Schnittansicht eines Ausführungsbeispiels des Magnetventils mit einer Polkernstufung, und
Fig. 4 einen Ausschnitt einer Schnittansicht eines Ausführungsbeispiels des Magnetventils mit einer Ankerstufung, und
Fig. 5 eine Finite-Elemente Darstellung der Wirkweise bei unbestromtem Zustand sowie bei bestromtem Zustand des Ventils.

Fig. 1 zeigt eine schematische Schnittansicht eines Magnetventils 1 aus dem Stand der Technik für Hydraulikaggregat für ein Fahrzeug. Eine Beschreibung dieses Magnetventils findet sich in den Ausführungen zum Stand der Technik.

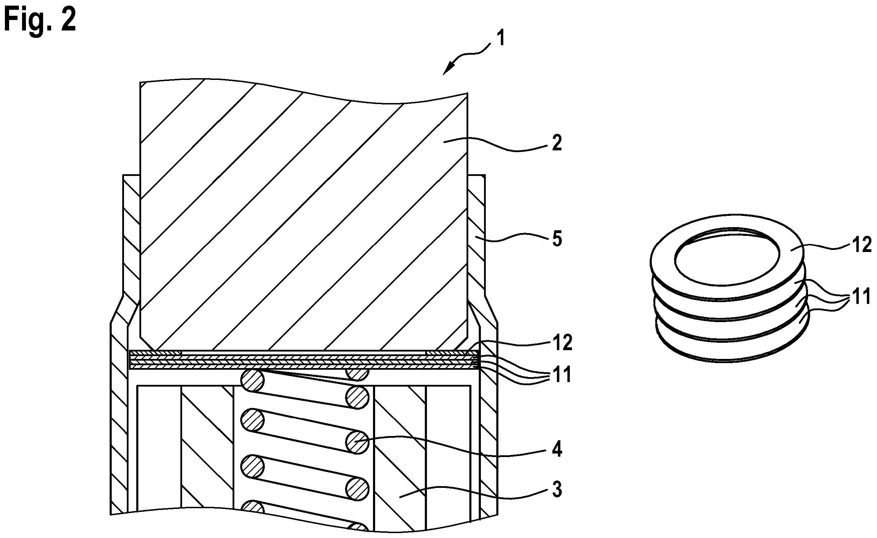

Fig. 2 zeigt einen Ausschnitt einer Schnittansicht eines Ausführungsbeispiels des Magnetventils 1 mit einer Restluftspaltscheibe 12 sowie mehreren Federscheiben 11. Hierbei ist die Restluftspaltscheibe 12 direkt an dem Polkern 2 positioniert. Als Restluftspaltscheibe 12 kommt eine Standardscheibe aus nicht-magnetisierbaren zum Einsatz. An die Restluftspaltscheibe 12 angegliedert sind mehrere Federscheiben 11 positioniert. Diese Federscheiben 11 sind aus magnetisch leitendem Material gefertigt. Eine als Schraubenfeder ausgebildete Druckfeder 4 ist in einer Aussparung des Ankers 3 positioniert, in welcher die Druckfeder 4 im Wesentlichen einliegt und geführt wird. Die Druckfeder 4 besitzt eine Vorspannung und stützt sich über die Federscheiben 11 und die Restluftspaltscheibe 12 am Polkern 2 ab. Hierdurch werden die Federscheiben 11 axial am Polkern 2 gehalten. Weiterhin erfolgt durch die Vorspannung der Druckfeder 4 eine Wölbung der Federscheiben 11 in Richtung des Polkerns 2. Im dargestellten Ausführungsbespiel werden 3 Federscheiben 11 verwendet.

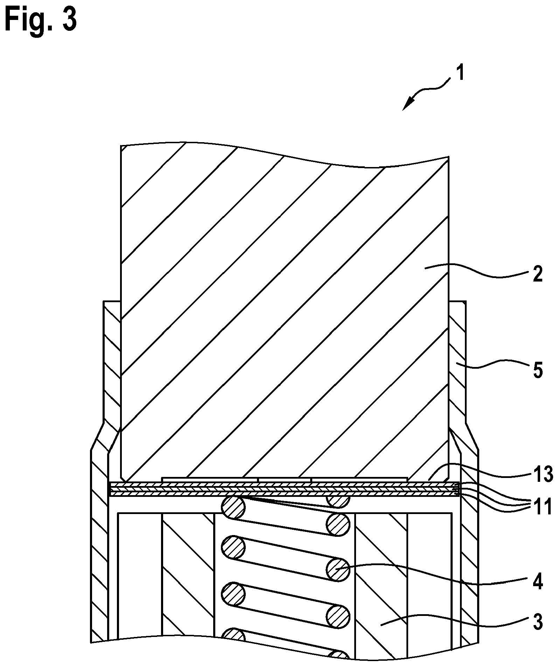

Fig. 3 zeigt einen Ausschnitt einer Schnittansicht eines Ausführungsbeispiels des Magnetventils 1 mit einer Polkernstufung 13. Im Allgemeinen wird auf die Ausführungen zu Fig. 2 verwiesen. Im Unterschied zur Ausführungsform in Fig. 2 wird jedoch in Fig. 3 auf eine Restluftspaltscheibe verzichtet. Stattdessen wird eine Abstützung der Federscheiben 11 am äußeren Rand sowie der benötigte Hohlraum für eine Wölbung der Federscheiben 11 in der Mitte durch eine Stufung 13 des Polkerns 2 erreicht. Die Polkernstufung 13 ist hierbei radial ausgeprägt und verläuft über den Umfang des Polkerns 2. Die Stufung 13 kann dabei eine oder mehrere über den Umfang verteilt Einkerbungen, bspw. für einen Fluidvolumenverschiebung aufweisen.

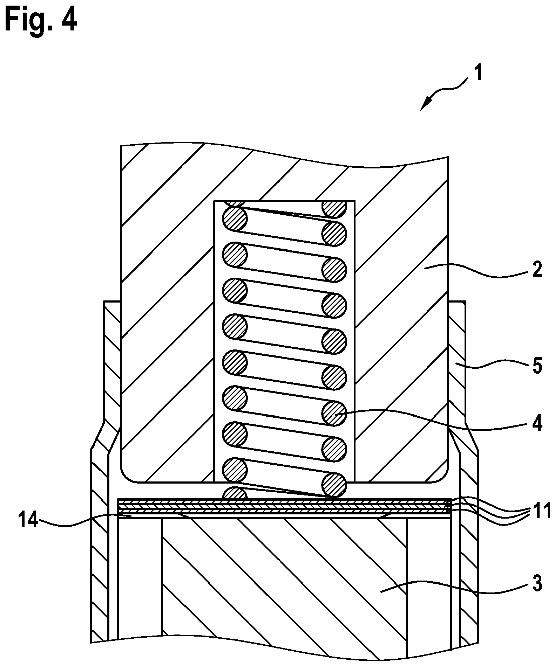

Fig. 4 zeigt einen Ausschnitt einer Schnittansicht eines alternativen Ausführungsbeispiels des Magnetventils 1 mit einer Ankerstufung 14. Es wird erneut auf die bereits getätigten Ausführungen, insbesondere zu Fig. 2 und Fig. 3, verwiesen. In der hier dargestellten Ausführung wird die Druckfeder 4 in eine Öffnung des Polkerns 2 integriert, sowie die Federscheiben 11 an der zum Polkern 2 weisenden Stirnfläche des Ankers 3 positioniert und mittels der Druckfeder 4 gehalten an dieser Position gehalten. Eine Abstützung der Federscheiben 11 am äußeren Rand sowie der benötigte Hohlraum für eine Wölbung der Federscheiben 11 in der Mitte durch eine Stufung 14 des Ankers 3 erreicht. Die Ankerstufung 14 ist hierbei radial ausgeprägt und verläuft über den Umfang des Ankers 3. Die Stufung 14 kann dabei eine oder mehrere über den Umfang verteilt Einkerbungen, bspw. für einen Fluidvolumenverschiebung aufweisen. Die Wölbung der Federscheiben 11 aufgrund der Vorspannung der Druckfeder 4 erfolgt nun in Richtung des Ankers 3. Auch bei einer derartigen Positionierung der Elemente kann vorteilhaft eine dämpfende Wirkung erzeugt und ein Anschlagen des Ankers 3 an den Polkern 2 gedämpft werden.

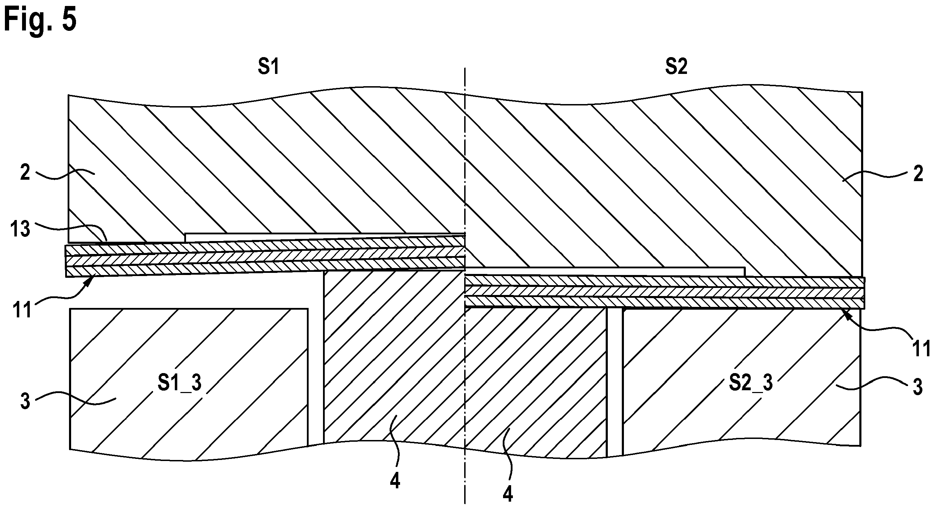

Fig. 5 zeigt eine Finite-Elemente Darstellung der Wirkweise bei unbestromtem Zustand S1 sowie bei bestromtem Zustand S2 des Magnetventils 1. Hierbei wird die Wirkweise beispielhaft am System wie in Fig. 3 beschrieben - mit den Federscheiben 11 am Polkern positioniert sowie einer Polkernstufung 13 - dargestellt. Links der Symmetrielinie ist die Ausgangsposition bei unbestromten Magnetventil 1 dargestellt. Zu erkennen ist die Vorspannung des Federscheibenpakets 11 durch die mittig dargestellte Druckfeder 4 sowie die am Außendurchmesser entstehende Biegung des Federscheibenpakets 11 in Richtung des Ankers 3. Weiterhin ist die Ausgangsposition S1_3 des Ankers 3 dargestellt für den unbestromten Zustand S1 dargestellt, wobei sich ein Arbeitsluftspalt zwischen dem Anker 3 und dem Federscheibenpaket 11 darstellt. Rechtes der Symmetrielinie ist der Anker 3 in seiner Endposition bei einem Bestromen des Magnetventils dargestellt. Hierbei ist die Endposition S2_3 des Ankers 3 dargestellt für den bestromten Zustand S1 dargestellt, wobei der Arbeitsluftspalt zwischen dem Anker 3 und dem Federscheibenpaket 11 abgebaut ist. Die gewünschte Dämpfung des Anschlagens des Ankers 3 an den Polkern 2 entsteht dadurch, dass der Anker 3 vor Erreichen seiner Endposition vom zum Anker 3 gebogenen Federscheibenpaket 11 verzögert wird. Ein Teil der Bewegungsenergie des Ankers 3 wird dabei mittels Rückverformung des gewölbten Federscheibenpakets 11 gewandelt.

## Patentansprüche

1. Stromlos geschlossenes Magnetventil (1), mit einer Ventilhülse (5, 6), in der ein Polkern (2) fest und ein Anker (3) axial verlagerbar angeordnet sind, wobei zwischen dem Polkern (2) und dem Anker (3) eine Druckfeder (4) wirkt, um ein mit dem Anker zusammenwirkendes Schließelement (9) in einen Ventilsitz (10) zu drängen, wobei eine Vorspannkraft der Druckfeder (4) eine Verformung einer elastischen, zwischen dem Anker (3) und dem Polkern (2) angeordneten Komponente (11) im unbestomten Zustand des Magnetventils (1) bewirkt, **dadurch gekennzeichnet, dass** ein Anschlagen des bewegten Ankers (3) an den Polkern (2) mittels einer Rückbildung dieser Verformung gedämpft wird.

2. Magnetventil (1) nach Anspruch 1, **dadurch gekennzeichnet, dass** die elastische Komponente (11) als zumindest eine Federscheibe (11), insbesondere als Federscheibenpaket, ausgebildet ist.

3. Magnetventil (1) nach Anspruch 2, **dadurch gekennzeichnet, dass** die Federscheibe (11) in unverformtem Zustand im Wesentlichen eben ist, sowie die Verformung eine Wölbung der Federscheibe (11) bewirkt.

4. Magnetventil (1) nach einem der Ansprüche 2 bis 3, **dadurch gekennzeichnet, dass** durch die Vorspannkraft der Druckfeder (4) ein Außenrand der Federscheibe (11) in Gegenrichtung zur wirkenden Vorspannkraft der Druckfeder (4) gewölbt wird, wobei mittels dieser Wölbung ein Anschlagen des Ankers (3) an den Polkern (2) gedämpft wird.

5. Magnetventil (1) nach einem der Ansprüche 2 bis 4, **dadurch gekennzeichnet, dass** zwischen dem Polkern (2) und der Federscheibe (11) eine Auflagemöglichkeit im äußeren radialen Bereich und ein Hohlraum im inneren radialen Bereich, insbesondere zur Ausbildung der Verformung der Federscheibe (11), ausgebildet ist.

6. Magnetventil (1) nach einem der Ansprüche 2 bis 5, **dadurch gekennzeichnet, dass** in unbestromtem Zustand des Ventils (1) ein Spalt zwischen der Federscheibe (11) und der dem Polkern (2) zugewandten Stirnseite des Ankers (3) vorliegt und in bestromtem Zustand des Ventils (1) die dem Polkern (2) zugewandte Stirnseite des Ankers (3) in direktem Kontakt, insbesondere in direktem Kontakt und im Wesentlichen flächig, an der Federscheibe (11) anliegt.

7. Magnetventil (1) nach einem der Ansprüche 2 bis 6, **dadurch gekennzeichnet, dass** eine zum Anker (3) weisende Stirnfläche des Polkerns (2) im Wesentlichen geschlossen und/oder eben ist, und zwischen dem Polkern (2) und der Federscheibe (11) eine Restluftspaltscheibe (12) positioniert ist,
wobei die Restluftspaltscheibe (12) insbesondere eine radial außen gelegene Auflagemöglichkeit für die Federscheibe (11) an den Polkern (2) sowie einen radial innen gelegenen Hohlraum zwischen der Federscheibe (11) und dem Polkern (2) ausbildet.

8. Magnetventil (1) nach einem der Ansprüche 2 bis 7, **dadurch gekennzeichnet, dass** eine zum Anker (3) weisende Stirnfläche des Polkerns (2) eine axial ausgebildete Kontur über den Durchmesser aufweist, wobei diese Kontur insbesondere eine radial außen gelegene Auflagemöglichkeit für die Federscheibe (11) an den Polkern (2) sowie einen radial innen gelegenen Hohlraum zwischen der Federscheibe (11) und dem Polkern (2) ausbildet.

9. Magnetventil (1) nach einem der Ansprüche 2 bis 8, **dadurch gekennzeichnet, dass** die Druckfeder (4), insbesondere eine Schraubenfeder (4), zumindest bereichsweise zwischen der Federscheibe (11) und dem Anker (3) angeordnet ist.

10. Magnetventil (1) nach einem der Ansprüche 2 bis 9, **dadurch gekennzeichnet, dass** die Federscheibe (11) mittels der Druckfeder (4) an der Stirnfläche des Polkern (2) axial gehalten wird.

11. Magnetventil (1) nach einem der vorhergehenden Ansprüche, **dadurch gekennzeichnet, das** ein Innendurchmesser der Auflagemöglichkeit größer ist als ein Außendurchmesser der Druckfeder (4).

## Claims

1. Normally closed solenoid valve (1) having a valve sleeve (5, 6) and a pole core (2) is fixedly arranged in said valve sleeve and an armature (3) is arranged in an axially displaceable manner in said valve sleeve, wherein a compression spring (4) acts between the pole core (2) and the armature (3) so as to push a closing element (9), which cooperates with the armature, into a valve seat (10), wherein a pre-stressing force of the compression spring (4) causes an elastic component (11) that is arranged between the armature (3) and the pole core (2) to deform when the solenoid valve (1) is in the non-energized state, **characterized in that** the impact of the moving armature (3) against the pole core (2) is damped by means of recovering this deformation.

2. Solenoid valve (1) according to Claim 1, **characterized in that** the elastic component (11) is configured as at least one spring washer (11), in particular as a spring washer stack.

3. Solenoid valve (1) according to Claim 2, **characterized in that** the spring washer (11) is essentially flat in the non-deformed state and the deformation produces a curvature of the spring washer (11).

4. Solenoid valve (1) according to any one of Claims 2 to 3, **characterized in that** as a result of the pre-stressing force of the compression spring (4) an outer edge of the spring washer (11) is curved in the opposite direction to the effective pre-stressing force of the compression spring (4), wherein this curvature damps the impact of the armature (3) against the pole core (2).

5. Solenoid valve (1) according to any one of Claims 2 to 4, **characterized in that** a supporting facility is configured between the pole core (2) and the spring washer (11) in the outer radial region and a hollow chamber is configured in the inner radial region, in particular so as to allow for the deformation of the spring washer (11).

6. Solenoid valve (1) according to any one of Claims 2 to 5 **characterized in that** when the valve (1) is in the non-energized state there is a gap between the spring washer (11) and the end face of the armature (3) that is facing the pole core (2) and when the valve (1) is in the energized state the end face of the armature (3) that is facing the pole core (2) lies in direct contact with the spring washer (11), in particular in direct contact and lying essentially in a planar manner against said spring washer.

7. Solenoid valve (1) according to any one of Claims 2 to 6, **characterized in that** an end face of the pole core (2) that is facing the armature (3) is essentially closed and/or flat and a residual air gap washer (12) is positioned between the pole core (2) and the spring washer (11),
wherein the residual air gap washer (12) forms in particular a radially outer-lying supporting facility for the spring washer (11) on the pole core (2) and also a radially inner-lying hollow chamber between the spring washer (11) and the pole core (2).

8. Solenoid valve (1) according to any one of Claims 2 to 7, **characterized in that** an end face of the pole core (2) that is facing the armature (3) comprises an axially configured contour around the diameter, wherein this contour forms in particular a radially outer-lying supporting facility for the spring washer (11) on the pole core (2) and also a radially inner-lying hollow chamber between the spring washer (11) and the pole core (2).

9. Solenoid valve (1) according to any one of Claims 2 to 8, **characterized in that** the compression spring (4), in particular a helical spring (4), is arranged at least in regions between the spring washer (11) and the armature (3).

10. Solenoid valve (1) according to any one of Claims 2 to 9, **characterized in that** the spring washer (11) is held by means of the compression spring (4) in an axial manner against the end face of the pole core (2).

11. Solenoid valve (1) according to any one of the preceding claims, **characterized in that** an inner diameter of the supporting facility is greater than an outer diameter of the compression spring (4) .

## Revendications

1. Soupape magnétique (1) qui est fermée à l'état non alimentée en courant, ladite soupape comprenant un manchon de soupape (5, 6) dans lequel un noyau polaire (2) est disposé de manière fixe et un induit (3) est disposé de manière déplaçable axialement, un ressort de compression (4) agissant entre le noyau polaire (2) et l'induit (3) pour solliciter un élément de fermeture (9), qui coopère avec l'induit, dans un siège de soupape (10), une force de précontrainte du ressort de compression (4) provoquant une déformation d'un composant élastique (11) qui est disposé entre l'induit (3) et le noyau polaire (2) lorsque la soupape magnétique (1) n'est pas alimentée en courant, **caractérisée en ce que** le processus de butée de l'induit déplacé (3) contre le noyau polaire (2) est amorti par une inversion de cette déformation.

2. Soupape magnétique (1) selon la revendication 1, **caractérisée en ce que** le composant élastique (11) est réalisé sous la forme d'au moins une rondelle élastique (11), notamment sous la forme d'un paquet de rondelles élastiques.

3. Soupape magnétique (1) selon la revendication 2, **caractérisée en ce que** la rondelle élastique (11) est sensiblement plane à l'état non déformé, et la déformation provoque un renflement de la rondelle élastique (11).

4. Soupape magnétique (1) selon l'une des revendications 2 et 3, **caractérisée en ce qu'**un bord extérieur de la rondelle élastique (11) dans le sens opposé à l'action de la force de précontrainte du ressort de compression (4) est incurvé par la force de précontrainte du ressort de compression (4), cette incurvation amortissant le processus de butée de l'induit (3) contre le noyau polaire (2).

5. Soupape magnétique (1) selon l'une des revendications 2 à 4, **caractérisée en ce qu'**une possibilité d'appui est prévue dans la zone radiale extérieure entre le noyau polaire (2) et la rondelle élastique (11) et une cavité est ménagée dans la zone radiale intérieure, en particulier pour permettre la déformation de la rondelle élastique (11).

6. Soupape magnétique (1) selon l'une des revendications 2 à 5, **caractérisée en ce que**, lorsque la soupape (1) n'est pas alimentée en courant, un intervalle est ménagé entre la rondelle élastique (11) et la face frontale de l'induit (3) qui est dirigée vers le noyau polaire (2) et, lorsque la soupape (1) est alimentée en courant, la face frontale de l'induit (3) qui est dirigée vers le noyau polaire (2) vient en contact direct, notamment en contact direct et de manière sensiblement bidimensionnelle, contre la rondelle élastique (11).

7. Soupape magnétique (1) selon l'une des revendications 2 à 6, **caractérisée en ce qu'**une face frontale du noyau polaire (2) qui est dirigée vers l'induit (3) est sensiblement fermée et/ou plane, et un disque d'intervalle résiduel (12) est positionné entre le noyau polaire (2) et la rondelle élastique (11), le disque d'intervalle résiduel (12) formant en particulier une possibilité d'appui radialement extérieure de la rondelle élastique (11) contre le noyau polaire (2) et une cavité radialement intérieure entre la rondelle élastique (11) et le noyau polaire (2) .

8. Soupape magnétique (1) selon l'une des revendications 2 à 7, **caractérisée en ce qu'**une face frontale du noyau polaire (2) qui est dirigée vers l'induit (3) présente un contour formé axialement sur le diamètre, ce contour formant notamment une possibilité d'appui radialement extérieur de la rondelle élastique (11) contre le noyau polaire (2) et une cavité radialement intérieure entre la rondelle élastique (11) et le noyau polaire (2).

9. Soupape magnétique (1) selon l'une des revendications 2 à 8, **caractérisée en ce que** le ressort de compression (4), notamment un ressort hélicoïdal (4), est disposé au moins partiellement entre la rondelle élastique (11) et l'induit (3).

10. Soupape magnétique (1) selon l'une des revendications 2 à 9, **caractérisée en ce que** la rondelle élastique (11) est maintenue axialement au moyen du ressort de compression (4) sur la face frontale du noyau polaire (2).

11. Soupape magnétique (1) selon l'une des revendications précédentes, **caractérisée en ce qu'**un diamètre intérieur de la possibilité d'appui est supérieur à un diamètre extérieur du ressort de compression (4).
